**Europäisches Patentamt**

(19) **European Patent Office**

**Office européen des brevets**

(11) Veröffentlichungsnummer: **0 069 693**
**B1**

(12) **EUROPÄISCHE PATENTSCHRIFT**

(45) Veröffentlichungstag der Patentschrift:
14.10.87

(51) Int. Cl.⁴: **H 02 B 13/02**

(21) Anmeldenummer: **82730073.2**

(22) Anmeldetag: **02.06.82**

(54) **Zylindrischer Behölter für eine dreipolige metallgekapselte, druckgasisolierte Hochspannungsschaltanlage.**

(30) Priorität: **02.07.81 DE 3126745**

(43) Veröffentlichungstag der Anmeldung:
**12.01.83 Patentblatt 83/2**

(45) Bekanntmachung des Hinweises auf die Patenterteilung:
**14.10.87 Patentblatt 87/42**

(84) Benannte Vertragsstaaten:
**CH DE GB LI NL SE**

(56) Entgegenhaltungen:
**FR-A-2 346 884**

(73) Patentinhaber: **Siemens Aktiengesellschaft Berlin und München, Wittelsbacherplatz 2, D-8000 München 2 (DE)**

(72) Erfinder: **Pircher, Christian, Potsdamer Strasse 93, D-1000 Berlin 30 (DE)**
Erfinder: **Schöps, Jürgen, Düsseldorfer Strasse 24, D-1000 Berlin 15 (DE)**

## Beschreibung

Die Erfindung betrifft einen zylindrischen Behälter für eine dreipolige metallgekapselte, druckgasisolierte Hochspannungsschaltanlage, aus dem zumindest zwei dreipolige Leiterabzweige herausgeführt sind. Diese sind mit den festen und beweglichen Kontakten eines dreipoligen, im Behälter liegenden Trennschalters verbunden, von denen drei gleiche Kontakte jeweils in einer parallel zur Druchmesserlängsebene des Behälters liegenden Ebene so angeordnet sind, daß sie und die anderen, ihnen gegenüberstehenden Kontakte, ebenso wie die dazwischen befindlichen, von Trennstiften überbrückbaren Trennstrecken jeweils in einer senkrecht zur Durchmesserlängsebene des Behälters verlaufenden Ebene liegen. Dabei sind zumindest drei gleiche Kontakte mit Anschlußleitern verbunden, die zumindest zu einem der dreipoligen Leiterabzweige führen und jeweils so ausgefächert weggeführt sind, daß sie in dem aus den Behälter führenden Leiterabzweig jeweils an den Spitzen eines angenähert gleichseitigen Dreiecks liegen. Gegebenenfalls ist noch ein dreipoliger, mit drei gleichen Kontakten des Trennschalters verbindbarer Erder im Behälter vorhanden.

Ein derartiger zylindrischer Behälter mit Trennschalter ist aus der FR-A-2 346 884 bekannt. Der bekannte Behälter liegt zwischen zwei Sammelschienensystemen einer dreipoligen metallgekapselten, druckgasisolierten Hochspannungsschaltanlage, deren Leiter sich jeweils an den Spitzen eines angenähert gleichseitigen Dreiecks befinden und stirnseitig in Behälter eingeführt sind. Auch die festen und beweglichen Kontakte des dreipoligen Trennschalters liegen ihrerseits an den Spitzen eines angenähert gleichseitigen Dreiecks, das jeweils in einer parallel zur Durchmesserlängsebene des Behälters verlaufenden Ebene liegt. Beide Ebenen haben zueinander den durch die Trennstrecken gegebenen Abstand. Die festen und beweglichen Kontakte des Trennschalters stehen einander jeweils gegenüber und liegen dabei, ebenso wie die dazwischen befindlichen, von den Trennstiften überbrückbaren Trennstrecken jeweils in zwei senkrecht zur Durchmesserlängsebene des Behälters verlaufenden Ebenen. Alle Trennstifte und Trennstrecken sind somit zueinander parallel.

Bei der bekannten Anordnung ist außerdem die Möglichkeit vorgesehen, in dem Behälter noch einen dreipoligen Erder unterzubringen, oder stattdessen einen dreipoligen Überspannungsableiter, ein weiteres Sammelschienensystem oder einen Kabelabzweig. Die Elemente dieser angeschlossenen Teile liegen entsprechend ebenfalls an den Spitzen eines gleichseitigen Dreiecks.

Es ist weiterhin aus der DE-OS 27 54 691 eine mehrphasige, metallgekapselte, druckgasisolierte Hochspannungsschaltanlage bekannt, die sich nur aus drei verschiedenen, die Kapselung bildenden Behältertypen zusammensetzt. Dadurch sind jeweils in einem ersten Behälter alle zu einer Sammelschiene führenden Schaltgeräte (Trennschalter) und stromführenden Teile untergebracht, in einem zweiten Behälter der Leistungsschalter und stromführende Teile und ein dritter Behälter enthält alle anschlußseitig erforderlichen Geräte und stromführenden Teile, wie Trennschalter, Kabelanschlußelemente und gegebenenfalls Erder. Auf diese Weise will man erreichen, daß sämtliche unterschiedlichen Feldschaltungen einer Hochspannungsschaltanlage baukastenähnlich zusammengesetzt werden können, wodurch sich die Fertigung und die Lagerhaltung der einzelnen Behältertypen wesentlich vereinfacht.

Der Erfindung liegt die Aufgabe zugrunde, eine dreipolige Kabelanschlußeinheit für eine dreipolige metallgekapselte, druckgasisolierte Hochspannungsschaltanlage konstruktiv so zu gestalten, daß der die Kapselung bildende Behälter möglichst kleine Abmessungen aufweist.

Zur Lösung dieser Aufgabe ist ein zylindrischer Behälter für eine dreipolige metallgekapselte, druckgasisolierte Hochspannungsschaltanlage mit Trennschalter, wie sie im Oberbegriff des Patentanspruchs 1 beschrieben ist, gemäß der Erfindung so ausgebildet, daß der Behälter eine dreipolige Kabelanschlußeinheit bildet, bei der ein dreipoliger Leiterabzweig aus drei stirnseitig eingeführten Kabelanschlußelementen besteht, die angenähert in einer parallel zur Durchmesserlängsebene des Behälters liegenden Ebene angeordnet und zu den in gleicher Weise angeordneten festen Kontakten des dreipoligen Trennschalters geführt sind, und daß die festen und die beweglichen Kontakte des Trennschalters, ebenso wie die dazwischen befindlichen Trennstrecken in einer einzigen, senkrecht zur Durchmesserlängsebene stehenden Ebene liegen, wobei die Trennstrecken in dieser Ebene geneigt zueinander verlaufen.

Die Kabelanschlußelemente und die mit ihnen verbundenen festen Kontakte des Trennschalters liegen also parallel zueinander, angenähert in einer parallelen Ebene zur Durchmesserebene des zylindrischen Behälters. Der Übergang zu den Leiterabzweigen mit ihren an den Spitzen eines angenähert gleichseitigen Dreiecks liegenden Leiter erfolgt innerhalb des Behälters im Bereich des Trennschalters in raumsparender Weise dadurch, daß die zwischen den festen und beweglichen Kontakten des Trennschalters liegenden, durch Trennerstifte überbrückbaren Trennstrecken in einer senkrecht zur Durchmesserlängsebene stehenden Ebene geneigt zueinander verlaufend liegen und dann erst nach den diesen Trennstrecken zugeordneten beweglichen Kontakten des Trennschalters abgehend die Auffächerung der Anschlußleiter vorgenommen wird. Dadurch erreicht man eine kleine Bauhöhe des Behälters, weil so der dreipolige Trennschalter in eine senkrecht zur Durchmesserlängsebene verlaufende Ebene gelegt werden kann. Außerdem kann der Antrieb für die Trennerstifte und für die Kontakte des gegebenenfalls vorhandenen Erders einfach ausgeführt werden und liegt auch im Behälter.

In einem derartigen zylindrischen Behälter mit der stirnseitigen Einführung der Kabelanschlußelemente ist eine dreiphasige Leiterabzweigung jeweils stirnseitig und eine zweite dreiphasige Leiterabzweigung senkrecht dazu liegend in der Mantelwand möglich.

Eine wesentliche Vereinfachung der Lagerhaltung erreicht man für die abgekröpft ausgebildeten Anschlußleiter des stirnseitigen Leiterabzweigs, wenn in vorteilhafter Weise die abgekröpft ausgebildeten Anschlußleiter im stirnseitigen Leiterabzweig, die entweder von den festen oder von den beweglichen Kontakten des Trennschalters abgehen, untereinander baugleich sind. Trotzdem bilden sie jeweils die Spitzen eines angenähert gleichseitigen Dreiecks im Leiterabzweig.

Es empfiehlt sich, sowohl die Trennerstifte des dreipoligen Trennschalters und ihre auf Hochspannungspotential liegenden Betätigungsmechanismen als auch die festen Kontakte des Trennschalters und die des gegebenenfalls vorhandenen Erders jeweils pro Phase mit einem Isolator im Behälter zu befestigen. Besonders zweckmäßig ist es, als Betätigungsmechanismus für die Trennerstifte des dreipoligen Trennschalters eine sehnenartig parallel zur Durchmesserlängsebene verlaufende Welle zu verwenden, zu der die Antriebswelle des gegebenenfalls vorhandenen Erders ebenfalls parallel verläuft.

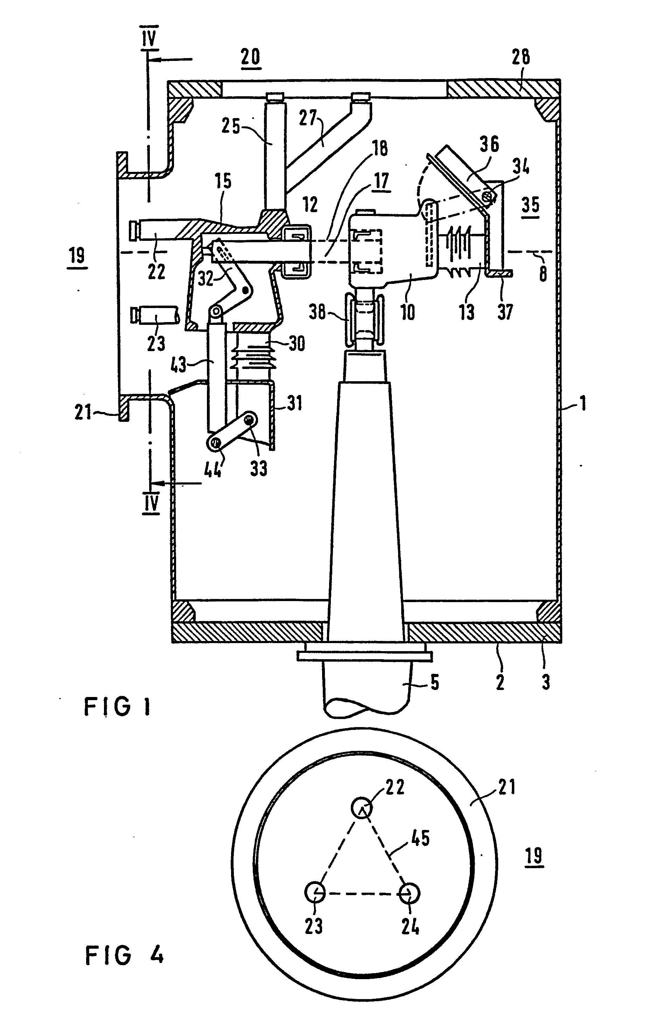

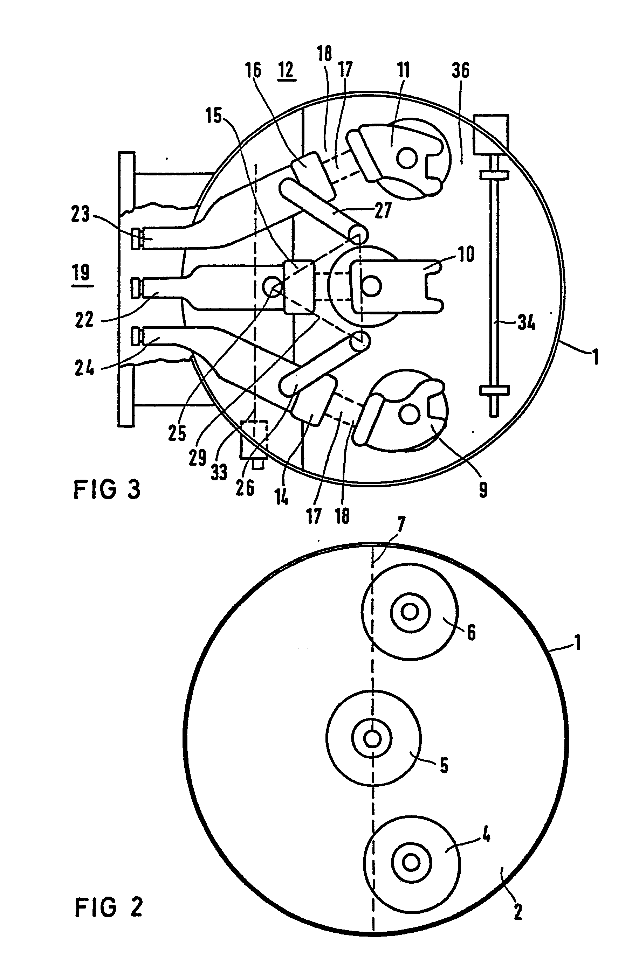

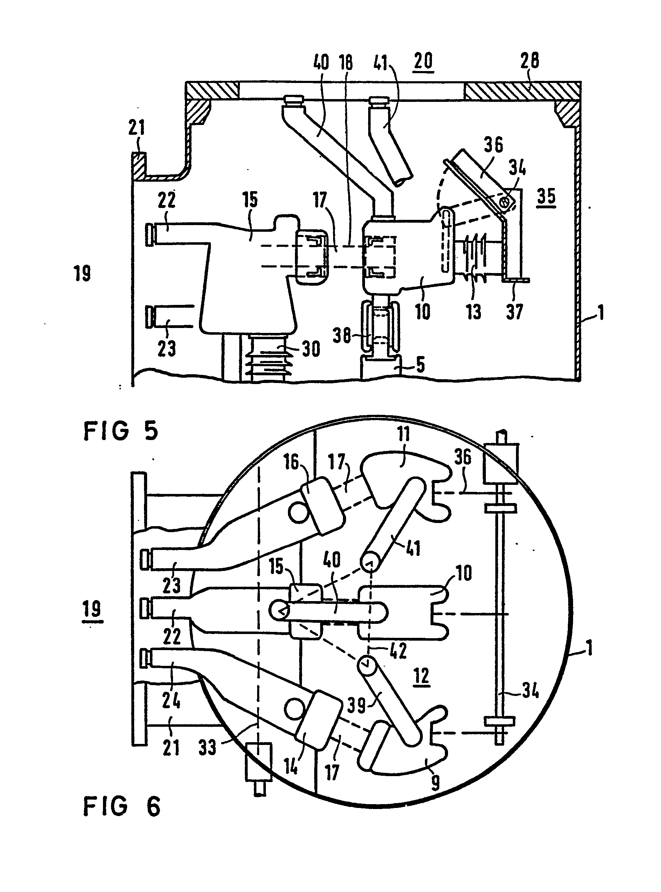

Im folgenden sei die Erfindung noch anhand der in den Figuren 1 bis 6 der Zeichnung dargestellten Ausführungsbeispiele näher erläutert. Figur 1 zeigt einen Längsschnitt durch eine gemäß der Erfindung ausgebildete Kabelanschlußeinheit, Figur 2 zeigte hiervon die Ansicht der unteren Stirnseite und die Fig. 3 die der oberen. Fig. 4 ist ein Schnitt entlang der Schnittlinie IV-IV in Fig. 1. Ein etwas modifiziertes Ausführungsbeispiel ist in Fig. 5 zum Teil als Längsschnitt und in Fig. 6 als Ansicht der oberen Stirnseite dargestellt.

Die dreipolige Kabelanschlußeinheit ist in einem metallischen zylindrischen Behälter 1 untergebracht, der die Kapselung bildet. Dieser ist an der unteren Stirnseite 2 von einem gasdichten Deckel 3 verschlossen, durch den drei Kabelanschlußelemente 4, 5, 6 eingeführt sind. Die Kabelanschlußelemente 4, 5, 6 liegen dabei angenähert in einer parallel zur Durchmesserlängsebene 7 des Behälters 1, die in der Fig. 2 gestrichelt angedeutet ist, verlaufenden Ebene nebeneinander. Sie sind zu den in einer rechtwinklig dazu liegenden, in Fig. 1 gestrichelt angedeuteten Ebene 8 angeordneten festen Kontakten 9, 10, 11 eines dreipoligen Trennschalters 12 geführt, von denen jeder über einen Isolator 13 im Behälter 1 befestigt ist. In dieser rechtwinklig zur Durchmesserlängsebene 7 des Behälters 1 verlaufenden Ebene 8 liegen ebenfalls die beweglichen Kontakte 14, 15, 16 des dreipoligen Trennschalters 12, wobei die von den in Fig. 3 gestrichelt angedeuteten Trennstiften 17 überbrückbaren Trennstrecken 18 in dieser Ebene 8 geneigt zueinander verlaufen.

Bei dem Ausführungsbeispiel nach den Fig. 1 bis 4 gehen von jedem beweglichen Kontakt 14, 15, 16 des Trennschalters 12 jeweils zwei Anschlußleiter ab, die aufgefächert zu den dreiphasigen Leiterabzweigen 19, 20 geführt sind. Der Leiterabzweig 19 ist durch die Mantelfläche des Behälters 1 geführt mit Hilfe des Flanschansatzes 21 (siehe Fig. 1, 3 und 4). Er ist von den drei Anschlußleitern 22, 23, 24 gebildet, die von den beweglichen Kontakten 14, 15, 16, die in der Ebene 8 angenähert parallel nebeneinander liegen, so aufgefächert sind, daß sie im Leiterabzweig 19 an den Spitzen eines in Fig. 4 gestrichelt angedeuteten, angenähert gleichseitigen Dreiecks 45 liegen. Die drei anderen ebenfalls von den beweglichen Kontakten 14, 15, 16 ausgehenden Anschlußleiter 25, 26, 27 führen zu dem dreiphasigen Leiterabzweig 20, der in der oberen Stirnfläche 28 des Behälters 1 liegt, und auch sie sind so aufgefächert, daß sie dort an den Spitzen eines angenähert gleichseitigen in Fig. 3 gestrichelt angedeuteten Dreiecks 29 liegen.

Jeder bewegliche Kontakt 14, 15, 16 des Trennschalters 12 ist mit einem Isolator 30 und einem Träger 31 im Behälter 1 befestigt. Dieser Isolator 30 trägt außerdem den Bewegungsmechanismus für die Trennerstifte 17 des Trennschalters 12, der somit außerdem auch innerhalb des Behälters 1 angeordnet ist. Zur Betätigung dient jeweils ein Winkelhebel 32, der über eine zwischengeschaltete Isolierstange 43 und den Hebel 44 von der Antriebswelle 33 bewegt werden kann. Diese Antriebswelle 33 verläuft sehnenartig parallel zur Durchmesserlängsebene 7 (siehe Fig. 3). Zur Antriebswelle 33 des Trennschalters 12 läuft weiterhin die Antriebswelle 34 des Erders 35 parallel. Die beweglichen Kontakte 36 des Erders 35 erden jeweils die festen Kontakte 9, 10, 11 des Trennschalters 12. Der Erder 35 ist auf der Tragwand 37 angeordnet, über welche die Isolatoren 13 der festen Kontakte 9, 10, 11 des Trennschalters 12 innerhalb des Behälters 1 befestigt sind.

Um die Einleitung von Kräften von den Kabelanschlußselemten 4, 5, 6 auf den Trennschalter 12, sowie umgekehrt, zu vermeiden, ist die Verbindung zwischen den festen Kontakten 9, 10, 11 des Trennschalters und den Kabelanschlußelementen 4, 5, 6 jeweils über einen Kuppelkontakt 38 hergestellt, der keine mechanischen Kräfte übertragen kann.

Das in den Fig. 5 und 6 dargestellte Ausführungsbeispiel ist gegenüber dem erst beschriebenen nur geringfügig modifiziert. Für gleiche Teile sind die gleichen Bezugszeichen beibehalten worden.

Bei dieser dreipoligen Kabelanschlußeinheit ist der in der oberen Stirnfläche 28 herausgeführte dreiphasige Leiterabzweig 20 aus drei Anschlußsleitern 39, 40 und 41 gebildet, von denen der Anschlußleiter 39 mit dem festen Kontakt 9, der Anschlußleiter 40 mit dem festen Kontakt 10 und der Anschlußleiter 41 mit dem festen Kontakt 11 des Trennschalters 12 verbunden ist. Die Anschlußleiter 39, 40, 41 sind von diesen festen Kontakten 9, 10, 11 ausgehend so aufgefächert, daß sie im Leiterabzweig 20 an den Spitzen eines in Fig. 6 gestrichelt angedeuteten, angenähert gleichseitigen Dreiecks 42 liegen.

Bei beiden Ausführungsbeispielen sind zur Vereinfachung der Lagerhaltung beim stirnseitigen Leiterabzweig 20 die abgekröpft ausgebildeten Anschlußleiter 26, 27, die zu den beweglichen Kontakten 14, 16 (Fig. 1) des Trennschalters 12 führen, baugleich mit den abgekröpften Anschlußleitern 39, 40, 41, die von den festen Kontakten 9, 10, 11 (Fig. 5) ausgehen. Es ergibt sich jeweils im Leiterabzweig 20 ein angenähert gleichseitiges Dreieck 29, 42. Der Anschlußleiter 25, vom beweglichen Kontakt 15 ausgehend, ist dagegen ein gerades Rohrstück.

## Patentansprüche

1. Zylindrischer Behälter (1) für eine dreipolige, metallgekapselte, druckgasisolierte Hochspannungsschaltanlage, aus dem zumindest zwei dreipolige Leiterabzweige (4, 5, 6; 19, 20) herausgeführt sind, die mit den festen und beweglichen Kontakten (9, 10, 11; 14, 15, 16) eines dreipoligen Trennschalters (12) verbunden sind, von denen drei gleiche Kontakte (9, 10, 11) jeweils in einer parallel zur Durchmesserlängsebene (7) des Behälters (1) liegenden Ebene so angeordnet sind, daß sie und die anderen, ihnen gegenüberstehenden Kontakte (14, 15, 16), ebenso wie die dazwischen befindlichen, von den Trennstiften (17) überbrückbaren Trennstrecken (18) jeweils in einer senkrecht zur Durchmesserlängsebene des Behälters verlaufenden Ebene liegen, wobei zumindest drei gleiche Kontakte (9, 10, 11 oder 14, 15, 16) mit Anschlußleitern (22, 23, 24; 25, 26, 27; 39, 40, 41) verbunden sind, die zumindest zu einem der dreipoligen Leiterabzweige (19, 20) führen und jeweils so aufgefächert weggeführt sind, daß sie in dem aus dem Behälter führenden Leiterabzweig (19, 20) jeweils an den Spitzen eines angenähert gleichseitigen Dreiecks (29, 42, 45) liegen und gegebenenfalls noch ein dreipoliger, mit drei gleichen Kontakten (9, 10, 11; 14, 15, 16) verbindbarer Erder (35) vorhanden ist, dadurch gekennzeichnet, daß der Behälter (1) eine dreipolige Kabelanschlußeinheit bildet, bei der ein dreipoliger Leiterabzweig aus drei stirnseitig eingeführten Kabelanschlußelementen (4, 5, 6) besteht, die angenähert in einer parallel zur Durchmesserlängsebene (7) des Behälters (1) liegenden Ebene angeordnet und zu den in gleicher Weise angeordneten festen Kontakten (9, 10, 11) des dreipoligen Trennschalters (12) geführt sind, und daß die festen (9, 10, 11) und beweglichen (14, 15, 16) Kontakte des Trennschalters (12), ebenso wie die dazwischen befindlichen Trennstrecken (18) in einer einzigen, senkrecht zur Durchmesserlängsebene (7) stehenden Ebene (8) liegen, wobei die Trennstrecken (18) in dieser Ebene (8) geneigt zueinander verlaufen.

2. Zylindrischer Behälter mit Trennschalter nach Anspruch 1, bei dem außer den Kabelanschlußelementen (4, 5, 6) zwei aus dem Behälter (1) geführte Leiterabzweige (19, 20) vorhanden sind, dadurch gekennzeichnet, daß ein Leiterabzweig (19) zu dem anderen stirnseitig ausgeführten Leiterabzweig (20) senkrecht stehend aus der Behälterwandung herausgeführt ist.

3. Zylindrischer Behälter mit Trennschalter nach Anspruch 1 oder 2, dadurch gekennzeichnet, daß ein eventuell vorhandener Erder (35) die festen Kontakte (9, 10, 11) des Trennschalters (12) erdet.

4. Zylindrischer Behälter mit Trennschalter nach Anspruch 1 oder 2 oder 3, dadurch gekennzeichnet, daß die Trennstifte (17) des dreipoligen Trennschalters (12) und ihre auf Hochspannungspotential liegenden Betätigungsmechanismen (32) jeweils pro Phase mit einem Isolator (30) im Behälter (1) befestigt sind.

5. Zylindrischer Behälter mit Trennschalter nach Anspruch 1 oder 2 oder 3, dadurch gekennzeichnet, daß die festen Kontakte (9, 10, 11) des Trennschalters (12) und des gegebenenfalls vorhandenen Erders (35) jeweils pro Phase mit einem Isolator (13) im Behälter (1) befestigt sind.

6. Zylindrischer Behälter mit Trennschalter nach Anspruch 1 oder 2 oder 3, dadurch gekennzeichnet, daß zur Betätigung der Trennstifte (17) des Trennschalters (12) eine sehnenartig parallel zur Durchmesserlängsebene (7) verlaufende Welle (33) dient, zu der die Antriebswelle (34) des gegebenenfalls vorhandenen Erders (35) ebenfalls parallel verläuft.

7. Zylindrischer Behälter mit Trennschalter nach Anspruch 1 oder 2 oder 3, dadurch gekennzeichnet, daß die Verbindung von den Kabelanschlußelementen (4, 5, 6) zum festen Kontakt (9, 10, 11) des Trennschalter (12) und zum gegebenenfalls vorhandenen Erder (35) jeweils durch einen Kuppelkontakt (38) hergestellt ist, der keine mechanischen Kräfte übertragen kann.

8. Zylindrischer Behälter mit Trennschalter nach Anspruch 1 oder 2, dadurch gekennzeichnet, daß die abgekröpft ausgebildeten Anschlußleiter (39, 40, 41, 26, 27) im stirnseitigen Leiterabzweig (20), die entweder von den festen Kontakten (9, 10, 11) oder von den beweglichen Kontakten (14, 16) des Trennschalters (12) abgehen, untereinander baugleich sind.

## Claims

1. A cylindrical container (1) for a three-pole, metal-clad, pressurised-gas-insulated high-voltage switch arrangement, out of which lead at least two three-pole conductor branches (4, 5, 6; 19, 20) which are connected to the fixed and moving contacts (9, 10, 11; 14, 15, 16) of a three-pole isolating switch (12), of which three identical contacts (9, 10, 11) are in each case arranged in a plane, parallel to the diametral longitudinal plane (7) of the container (1), in such manner that they and the other contacts (14, 15, 16), arranged opposite to them, and likewise the intervening isolating paths (18), which can be bridged by the isolating pins (17), are each arranged in a plane at right angles to the diametral longitudinal plane of the container, where at least three identical contacts (9, 10, 11 or 14, 15, 16) are connected to connecting conductors (22, 23, 24; 25, 26, 27; 39, 40, 41) which lead at least to one of the three-pole conductor branches (19, 20), being fanned out in such manner that in the conductor branch (19, 20) which leads out of the container they are each located at the apices of an approximately equilateral triangle (29, 42, 45) and where appropriate a three-pole earth plate (35), which can be connected to three identical contacts (9, 10, 11; 14, 15, 16) is additionally provided, characterised in that the container (1) forms a three-pole cable connecting unit in which a three-pole conductor branch consists of three cable connecting elements (4, 5, 6) which are inlet at an end face and which are arranged approximately in a plane parallel to the diametral longitudinal plane (7) of the container (1) and lead to the fixed contacts (9, 10, 11), arranged in the same fashion, of the three-pole isolating switch (12) and that the fixed contacts (9, 10, 11) and moving contacts (14, 15, 16) of the isolating switch (12), and likewise the intervening isolating paths (18), are arranged in a single plane (8) at right angles to the diametral longitudinal plane (7), where the isolating paths (18) extend at an inclination in relation to one another in this plane (8).

2. A cylindrical container with an isolating switch as claimed in Claim 1, wherein, two conductor branches (19, 20), which lead out of the container (1), are provided in addition to the cable connecting elements (4, 5, 6), characterised in that one conductor branch (19) leads out through the container wall at right angles to the other front-end conductor branch (20).

3. A cylindrical container with an isolating switch as claimed in Claim 1 or 2, characterised in that where an earth plate (35) is provided it earths the fixed contacts (9, 10, 11) of the isolating switch (12).

4. A cylindrical container with an isolating switch as claimed in Claim 1 or 2 or 3, characterised in that the isolating pins (17) of the three-pole isolating switch (12), and their actuating mechanisms (32), which carry high voltage potential, are each attached to an insulator (30) in the container (1) in respect of each phase.

5. A cylindrical container with an isolating switch as claimed in Claim 1 or 2 or 3, characterised in that the fixed contacts (9, 10, 11) of the isolating switch (12) and the earth plate (35), where this is provided, are each attached to an insulator (13) in the container (1) in respect of each phase.

6. A cylindrical container with an isolating switch as claimed in Claim 1 or 2 or 3, characterised in that the isolating pins (17) of the isolating switch (12) are actuated by a shaft (33) which extends along a chord parallel to the diametral longitudinal plane (7) and to which the drive shaft (34) of the earth plate (35), where this is provided, likewise extends in parallel.

7. A cylindrical container with an isolating switch as claimed in Claim 1 or 2 or 3, characterised in that the connection of the cable connecting elements (4, 5, 6) to the fixed contact (9, 10, 11) of the isolating switch (12) and to the earth plate (35), where this is provided, is in each case established by a coupling contact (38) which cannot transmit mechanical forces.

8. A cylindrical container with an isolating switch as claimed in Claim 1 or 2, characterised in that the offset connecting conductors (39, 40, 41, 26, 27) in the front-end conductor branch (20), which lead away either from the fixed contacts (9, 10, 11) or from the moving contacts (14, 16) of the isolating switch (12), are of identical construction.

## Revendications

1. Cuve cylindrique (1) pour une installation tripolaire haute tension, blindée et à isolation par un gaz, hors de laquelle sortent au moins deux dérivations de conducteurs tripolaires (4, 5, 6 ; 19, 20) qui sont reliées aux contacts fixes et mobiles (9, 10, 11 ; 14, 15, 16) d'un sectionneur tripolaire (13) et dont trois contacts identiques (9, 10, 11) sont respectivement disposés de telle manière dans un plan qui est parallèle au plan diamétral longitudinal (7) de la cuve, que ces contacts et les autres contacts (14, 15, 16) qui leur font face, de même que les espaces de coupure intermédiaires (18) se situent dans un plan qui est perpendiculaire au plan diamétral longitudinal de la cuve, au moins trois contacts identiques (9, 10, 11 ou 14, 15, 16) étant reliés à des conducteurs de branchement (22, 23, 24 ; 25, 26, 27 ; 39, 40, 41) qui mènent à l'une des dérivations de conducteurs tripolaires (19, 20) et qui s'écartent en éventail de manière à se situer, dans la dérivation (19, 20) sortant de la cuve, respectivement aux sommets d'un triangle à peu près équilatéral (29, 42, 45) et une mise à la terre tripolaire (35) étant en outre prévue, qui est susceptible d'être lige à trois contacts identiques (9, 10, 11 ; 14, 15, 16), caractérisée par le fait que la cuve (1) forme un ensemble tripolaire à boîte de branchement pour les câbles, dans lequel une dérivation de conducteurs tripolaires est constituée par trois éléments de branchement de câbles bles (4, 5, 6) qui sont introduits frontalement, qui sont disposés à peu près dans un plan parallèle au plan diamétral longitudinal (7) de la cuve (1) et qui mènent aux contacts fixes (9, 10, 11) du sectionneur tripolaire (12) disposés de la même façon et que les contacts fixes (9, 10, 11) et mobiles (14, 15, 16) du sectionneur (12), de même que les espaces de coupure (18) situés entre eux, se situent dans un seul et même plan (6), parallèle au plan diamétral longitudinal (7), les voies de coupure étant inclinées entre elles dans ledit plan (8).

2. Cuve cylindrique avec sectionneur selon la revendication 1, dans laquelle il est prévu, en plus des éléments de branchement de câbles (4, 5, 6) deux dérivations de conducteurs (19, 20) sortant de la cuve (1), caractérisée par le fait qu'une dérivation de conducteur (19) sort de la paroi de la cuve en position perpendiculaire par rapport à l'autre dérivation de conducteur (20) qui sort frontalement.

3. Cuve cylindrique à sectionneur selon la revendication 1 ou 2, caractérisée par le fait qu'une mise à la terre (35) qui est éventuellement prévue, met à la terre les contacts fixes (9, 10, 11) du sectionneur (12).

4. Cuve cylindrique avec sectionneur selon la revendication 1 ou 2 ou 3, caractérisée par le fait que les tiges de coupure (17) du sectionneur tripolaire (12) et leurs mécanismes de commande (32) qui sont portés au potentiel haute tension, sont fixés, par phase, avec un isolateur (30) dans la cuve (1).

5. Cuve cylindrique à sectionneur selon la revendication 1 ou 2 ou 3, caractérisée par le fait que les contacts fixes (9, 10, 11) du sectionneur (12) et la mise à la terre (35) qui est éventuellement prévue, sont fixés respectivement et par phase à l'aide d'un isolateur (13) dans la cuve (1).

6. Cuve cylindrique à sectionneur selon la revendication 1 ou 2 ou 3, caractérisée par le fait que pour commander les tiges de coupure (17) du sectionneur (12), on met en oeuvre un arbre (33) ayant la forme d'une corde et s'étendant parallèlement au plan diamétral longitudinal (7), l'arbre de commande (34) de la mise à la terre (35) qui est éventuellement prévu, étant parallèle à l'arbre en forme de corde.

7. Cuve cylindrique à sectionneur selon la revendication 1 ou 2 ou 3, caractérisée par le fait que la liaison entre les éléments de branchement de câbles (4, 5, 6) et le contact fixe (9, 10, 11) du sectionneur (12), et la mise à la terre (35) qui est éventuellement prévue, est établie par un contact de couplage (38) qui ne peut transmettre aucune force mécanique.

8. Cuve cylindrique à sectionneur selon la revendication 1 ou 2, caractérisée par le fait que les conducteurs de branchement (39, 40, 41, 26, 27) qui sont réalisés avec un coude, et qui sont situés dans la branche de conducteur (20) frontale, et qui partent soit des contacts fixes (9, 10, 11) ou des contacts mobiles (14, 16) du sectionneur (12), sont d'une seule et même construction.

FIG 1

FIG 4

FIG 3

FIG 2

0 069 693

FIG 5

FIG 6

5